# EUROPÄISCHE PATENTSCHRIFT

(11) **EP 2 735 890 B1**
(45) Veröffentlichungstag und Bekanntmachung des Hinweises auf die Patenterteilung: **04.03.2015**
(21) Anmeldenummer: 13401102.2
(22) Anmeldetag: 13.09.2013
(51) Int. Cl.: G01V 3/15

(54) **Suchgerät mit teleskopierbarer verdrehsicherer Trag-/Führungsstange**
Detector with a telescopic rotation-proof carry/guide rod
Appareil de recherche avec une tige de guidage/transportation télescopique sécurisée contre la rotation

(30) Priorität: 27.11.2012 DE 202012104609 U
(43) Veröffentlichungstag der Anmeldung: 28.05.2014
(73) Patentinhaber: Vallon GmbH, 72800 Eningen (DE)
(72) Erfinder:
(74) Vertreter: Klocke, Peter

(56) Entgegenhaltungen:
- EP-A1- 0 520 534
- EP-A1- 0 858 761
- DE-A1- 3 722 961
- DE-A1- 3 917 351
- DE-C2- 4 318 563
- DE-U1- 29 813 686

## Beschreibung

Die Erfindung betrifft ein Suchgerät mit einer teleskopierbaren Trag-/Führungsstange, an der an einem Ende eine Messsonde angeordnet ist, wobei die Trag-/Führungsstange mindestens zwei ineinander längsverschiebbare einander gegenüber blockierbare verdrehsichere Rohre aufweist, die ein Außenrohr und ein Innenrohr bilden, wobei die Rohre eine Lineargleitführung als Verdrehsicherung aufweisen.

Derartige Suchgeräte sind in vielfältigen Ausführungsformen für verschiedene Einsatzzwecke bekannt. Beispielhaft wird auf handgeführte Eisen- und Metalldetektoren verwiesen, die zum Auffinden von im Boden verborgenen metallischen Gegenständen, beispielsweise Kampfmitteln, gedacht sind und nach magnetischen oder elektromagnetischen Verfahren arbeiten. Die teleskopierbare Trag-/Führungsstange ermöglicht durch Verschieben der Rohre zueinander die Anpassung des Suchgerätes an unterschiedliche Einsatzbedingungen und Körpergrößen des Benutzers im Hinblick auf eine ergonomische Handhabung. Bei den zwei oder mehr ineinander längsverschiebbar geführten Rohren, von denen jeweils zwei in radialer Richtung direkt benachbarte Rohre ein Außenrohr und ein Innenrohr bilden, weist das jeweilige Außenrohr üblicherweise an seinem zur Messsonde weisenden aufschubseitigen Rohrende eine Feststelleinrichtung für das verschiebbare Innenrohr auf, mit der das Innenrohr und das Außenrohr einander gegenüber gegen Längsverschiebung blockierbar sind.

Bekannte Suchgeräte der eingangs genannten Art weisen neben der an dem vorderen Ende der Trag-Führungsstange angeordneten Messsonde meist an dem anderen Ende der Trag-/Führungsstange ein Griffstück auf, das die Führung des Suchgerätes bei der Suche erleichtert. Das Griffstück und die Messsonde sind für eine ergonomische Handhabung des Suchgerätes exakt definiert zueinander ausgerichtet. Deren Ausrichtung zueinander ist unabhängig von der eingestellten Länge der teleskopierbaren Trag-/Führungsstange und sollte beim Verschieben des Innenrohres und des Außenrohres relativ zueinder unverändert beibehalten werden. Aus der Patentschrift DE 43 18 563 C2 ist ein gattungsgemäßes Trag-/Führungsrohr mit einer Verdrehsicherung für das jeweilige Außenrohr gegenüber dem jeweiligen Innenrohr bekannt.

Das dort offenbarte Trag-/Führungsrohr besteht aus mindestens zwei ineinander verschiebbaren Rohren, wobei zwischen jeweils zwei unmittelbar ineinander verschiebbaren Rohren eine Art Nut- und Federführung wirksam ist. Hierzu ist an einem von jeweils zwei unmittelbar ineinander verschiebbaren Rohren ein sich in Längsrichtung erstreckender Steg angebracht, der in eine am jeweils anderen Rohr direkt oder indirekt angebrachte Führungsnut eingreift. Dadurch wird bei einer Längsverschiebung sichergestellt, dass sich das Innenrohr gegenüber dem Außenrohr nicht verdrehen kann, sodass eine bezüglich ihrer Winkelposition stets gleiche Zuordnung für alle Rohre der Trag-/Führungsstange sichergestellt ist. Das am äußersten Außenrohr angebrachte Griffstück steht beispielsweise senkrecht an diesem Rohr nach oben ab, während die am innersten Innenrohr angebrachte Sonde so ausgerichtet ist, dass deren Sondenfläche waagrecht verläuft.

Als nachteilig wird bei diesem Stand der Technik angesehen, dass der Führungssteg am Außenumfang des jeweiligen Innenrohres und die Führungsnut am Innenumfang der Feststelleinrichtung vorgesehen ist, und dass der Führungssteg als separates Teil hergestellt und in eine in das jeweilige Innenrohr eingefräste Längsnut eingeklebt ist. Damit ist die Herstellung der Verdrehsicherung aufwendig, erschwert und kostenintensiv.

Ausgehend von dem vorstehend genannten Stand der Technik liegt der Erfindung die Aufgabe zugrunde, eine einfachere und kostengünstigere Lösung für die Verdrehsicherung vorzuschlagen.

Diese Aufgabe wird erfindungsgemäß durch ein Suchgerät mit den Merkmalen des unabhängigen Anspruchs 1 gelöst. Weitere vorteilhafte Ausführungsformen sind den abhängigen Ansprüchen zu entnehmen.

Danach weisen die Rohre des erfindungsgemäßen Suchgerätes eine Lineargleitführung als Verdrehsicherung auf, die das jeweilige Außenrohr gegenüber dem unmittelbar darin verschiebbaren Innenrohr verdrehsicher führt. Damit kann die Längenänderung der teleskopierbaren Trag-/Führungsstange problemlos vorgenommen werden, ohne dass sich dabei die Ausrichtung der Messsonde gegenüber dem äußersten Außenrohr am rückwärtigen Ende der Trag-/Führungsstange verändert, an der optional ein Griffstück angeordnet ist. Unter Lineargleitführung wird in diesem Zusammenhang ein Element der Lineartechnik verstanden, das eine möglichst reibungsfreie Translation der Rohre des Suchgerätes ermöglicht und dabei gleichzeitig die Einhaltung der axialen Bewegungsrichtung, d.h. einer linearen Bahn garantiert. Solche Lineargleitführungen basieren auf mindestens zwei Führungselementen beispiesweise Führungsschienen oder im einfachsten Fall aus einem Spiel behafteten Nut-Feder-System.

Erfindungsgemäß weist die Lineargleitführung mindestens eine an der Innenwand des Außenrohres angeordnete Längsrippe und mindestens eine an dem Außenumfang des Innenrohres angeordnete Rippenführung auf, wobei die Rippenführung eine Ausnehmung aufweist, in die die Längsrippe axial verschiebbar eingreift. Dabei ist die Längsrippe innen an dem Außenrohr bzw. dem Innenrohr/Außenrohr angeformt, wobei die Rohre gewickelte oder stranggepresste Metallrohre oder gewickelte, gespritzte oder stranggezogene Kunststoffrohre sind. Somit kann die Ausnehmung, die die Rippenführung bildet, auf eine einfache Weise durch Nacharbeit am Außenumfang des jeweiligen Innenrohres bzw. Innenrohres/Außenrohres hergestellt werden.

Die Längsrippe erstreckt sich innen über die Gesamtlänge des Außenrohres und die Rippenführung sich außen über eine Teillänge des Innenrohres. Die Länge der Längsrippe ist durch das Herstellungsverfahren der Rohre bedingt und erfordert keine Nacharbeit in irgendeiner Art und Weise. Die Rippenführung, die von einer am Außenumfang des Innenrohres angeordneten Führungshülse gebildet ist, beschränkt sich auf eine zur exakten Führung der Längsrippe notwendigen Länge, so dass zum einen die Leichtgängigkeit der Verschiebung des jeweiligen Innenrohrs gegenüber dem Außenrohr gewährleistet und zum anderen unnötiger Mehraufwand bei der Herstellung der Rohre ausgeschlossen ist. Die Führungshülse ist in Umfangsrichtung des Innenrohres geteilt ausgebildet.

Bei dem erfindungsgemäßen Suchgerät ist die Rippenführung an dem einschubseitigen Rohrende des Innenrohres angeordnet. Dabei kann die Rippenführung von einer am Außenumfang des Innenrohres angeordneten Führungshülse gebildet sein, die eine der Anzahl der Führungsrippen des Außenrohres entsprechende Zahl von Ausnehmungen aufweist, oder von einer der Anzahl der Führungsrippen des Außenrohres entsprechenden Zahl von schalenförmigen in Umfangsrichtung beabstandet zueinander angeordneten Führungshülsensegmenten, deren sich vornehmlich axial erstreckende Zwischenräume die Ausnehmungen bilden. Die Anordnung der Rippenführung am Rohrende vereinfacht die Herstellung der mindestens einen Ausnehmung für die wenigstens eine Längsrippe bzw. die Montage der Führungshülse respektive der Führungshülsensegmente außen an dem jeweiligen Innenrohr. Die Verwendung gleichartiger Führungshülsensegmente zwischen den Rohren bedeutet eine Vereinfachung für die Herstellung. Dabei können die Führungshülse bzw. die Führungshülsensegmente aus Metall, Kunststoff oder einen sonstigen geeigneten Material durch spanende und/oder plastische Formgebung hergestellt sein.

Bei einer bevorzugten Ausführungsform ist die Führungshülse oder sind die Führungshülsensegmente über Haltezapfen, die in Haltedurchbrüche des Innenrohres eingreifen, an dem Innenrohr außen unverrückbar fixiert. Die Haltedurchbrüche lassen sich als Bohrungen besonders einfach und kostengünstig erzeugen. Die Haltezapfen sind günstigerweise an die Führungshülse an der dem Innenrohr zugeordneten Umfangsseite angeformt, wobei die Führungshülse und die Führungshülsensegmente vorzugsweise aus Kunststoffmaterial im Spritzgießverfahren gefertigt sind. Die Haltezapfen verursachen damit kaum Mehrkosten. Außerdem ist eine einfache und unverrückbare Montage der Führungshülse durch axiales Aufschieben auf das Innenrohr und der Führungshülsensegmente durch radiales Aufsetzen auf das Innenrohr möglich. Ein Presssitz der Haltezapfen in den Haltedurchbrüchen ist in beiden Fällen nicht notwendig, ein Gleitsitz genügt. Insbesondere werden die Führungshaltesegmente durch das jeweils montierte Außenrohr in radialer Richtung Lage gesichert.

Bei einer favorisierten Variante der Erfindung bildet die dem einschubseitigen Rohrende des Innenrohres abgewandte Stirnseite der Führungshülse oder der Führungshülsensegmente einen Endanschlag für das aufschubseitige Rohrende des Außenrohres. Es ist selbstverständlich, dass das Außenrohr an dieser Stelle einen Gegenanschlag aufweisen muss, der mit dem Endanschlag zusammen wirkt. Der Gegenanschlag kann beispielsweise an der dort angeordneten Feststelleinrichtung problemlos und kostengünstig realisiert werden.

Vorzugsweise weisen die Führungshülse oder die Führungshülsensegmente an dem dem Außenrohr zugeordneten Außenumfang axial verlaufende voneinander in Umfangsrichtung beabstandete Längserhebungen auf. Die Längserhebungen bilden Gleitlager für das jeweilige das Innenrohr umgreifende Außenrohr und ermöglichen das Außenrohr gegenüber dem Innenrohr mit minimalem Kraftaufwand axial zu verschieben. Außerdem wirken die Zwischenräume zwischen den Längserhebungen als Verdrängungsraum für etwaig eingedrungene Schmutzpartikel.

Nachfolgend wird die Erfindung anhand eines in der Zeichnung dargestellten Ausführungsbeispiels näher erläutert. Weitere Merkmale der Erfindung ergeben sich aus der folgenden Beschreibung des Ausführungsbeispiels der Erfindung in Verbindung mit den Ansprüchen und der beigefügten Zeichnung. Die einzelnen Merkmale der Erfindung können dabei für sich allein oder zu mehreren bei unterschiedlichen Ausführungsformen der Erfindung verwirklicht sein. Es zeigen:
- Figur 1: ein erfindungsgemäßes Suchgerät mit teleskopierbarer Trag-/Führungsstange in perspektivischer Ansicht;
- Figur 2: die Trag-/Führungsstange aus Figur 1, mit einem Außenrohr und einem Innenrohr in einer Querschnittsdarstellung im Bereich einer von zwei Führungshülsensegmenten und einer Längsrippe gebildeten Lineargleitführung;
- Figur 3: das Innenrohr aus Figur 2 mit den aufgesetzten Führungshülsensegmenten; und
- Figur 4: das Innenrohr aus Figur 3 in Längsschnittdarstellung.

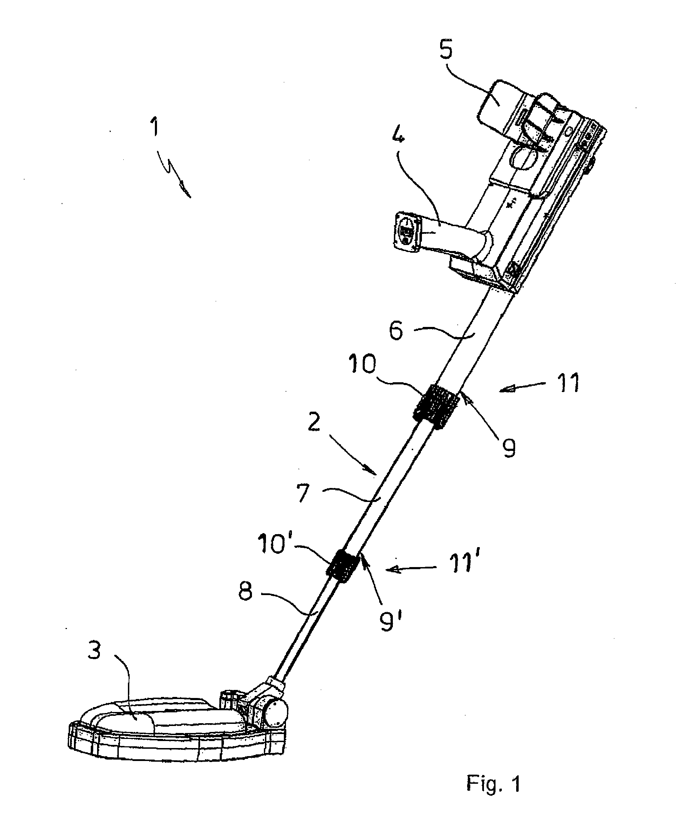

Die Figur 1 zeigt ein erfindungsgemäßes Suchgerät 1 mit einer teleskopierbaren Trag-/Führungsstange 2, an deren einem Ende eine Messsonde 3 und anderem Ende ein Griffstück 4 nahe einer Unterarmstütze 5 angeordnet ist. Die Trag-/Führungsstange weist drei ineinander längsverschiebbar geführte Rohre 6, 7, 8 auf, wobei das Rohr 6 ein reines Außenrohr und das Rohr 8 ein reines Innenrohr ist und wobei das Rohr 7 ein Innenrohr 7 für das Außenrohr 6 und ein Außenrohr 7 für das Innenrohr 8 bildet. An dem aufschubseitigen Rohrende 9, 9' der Rohre 6 bzw. 7 ist jeweils eine Feststelleinrichtung 10, 10' angeordnet, mit der das innerste Innenrohr 8 an dem mittleren Rohr 7 und das Rohr 7 an dem äußersten Außenrohr 6 in einer beliebigen Relativstellung zueinander festlegbar ist. Die Feststelleinrichtungen 10, 10' an den Klemmbereichen 11, 11' sind in der Zeichnung nur schematisch dargestellt und bis auf die Größe identisch bei gleicher Wirkungsweise ausgebildet.

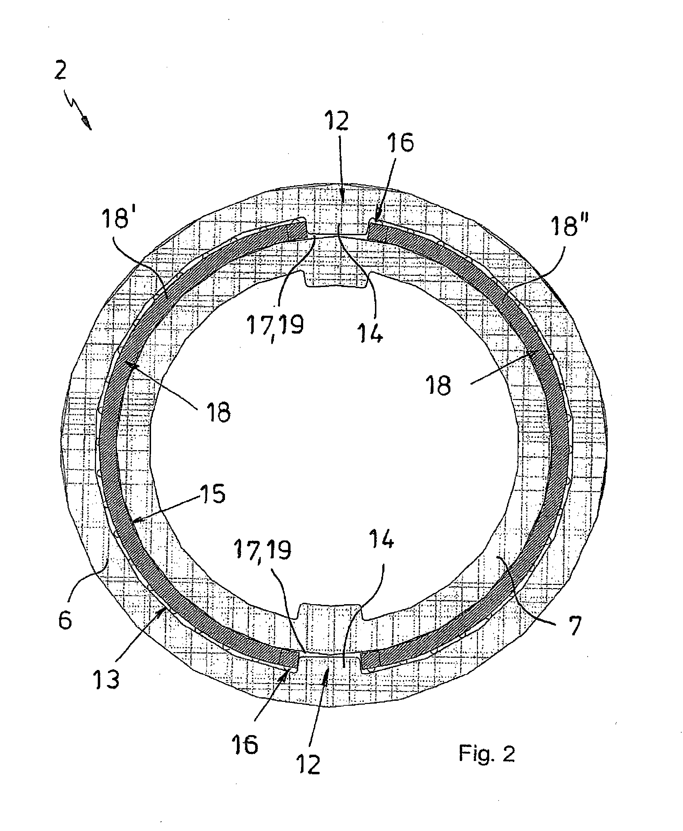

In der Figur 2 ist die teleskopierbare Trag-/Führungsstange 2 in einer Querschnittsdarstellung abgebildet. Es ist zu erkennen, dass das Innenrohr 7 in dem Außenrohr 6 überlappend verdrehsicher über eine Lineargleitführung 12 längsverschiebbar angeordnet ist. Das Außenrohr 6 weist zwei an die Innenwand 13 angeformte Längsrippen 14 auf, die sich über die Gesamtlänge des Außenrohres 6 innen erstrecken. Das Innenrohr 7 ist an dem Außenumfang bzw. der Außenwand 15 mit einer Rippenführung 16 für die Längsrippen 14 versehen, die nur über eine Teillänge des Innenrohres 7 außen verläuft. Die Rippenführung 15 weist zwei Ausnehmungen 17 auf, in die die beiden Längsrippen 14 axial verschiebbar eingreifen. Die Rippenführung 16 ist dabei von zwei in Umfangsrichtung voneinander beabstandeten schalenförmigen Führungshülsensegmenten 18', 18" gebildet, deren Zwischenräume 19 die Ausnehmungen 17 bilden. Die beiden Führungshülsensegmente 18', 18" stellen zusammengenommen eine in Umfangsrichtung geteilte Führungshülse 18 dar.

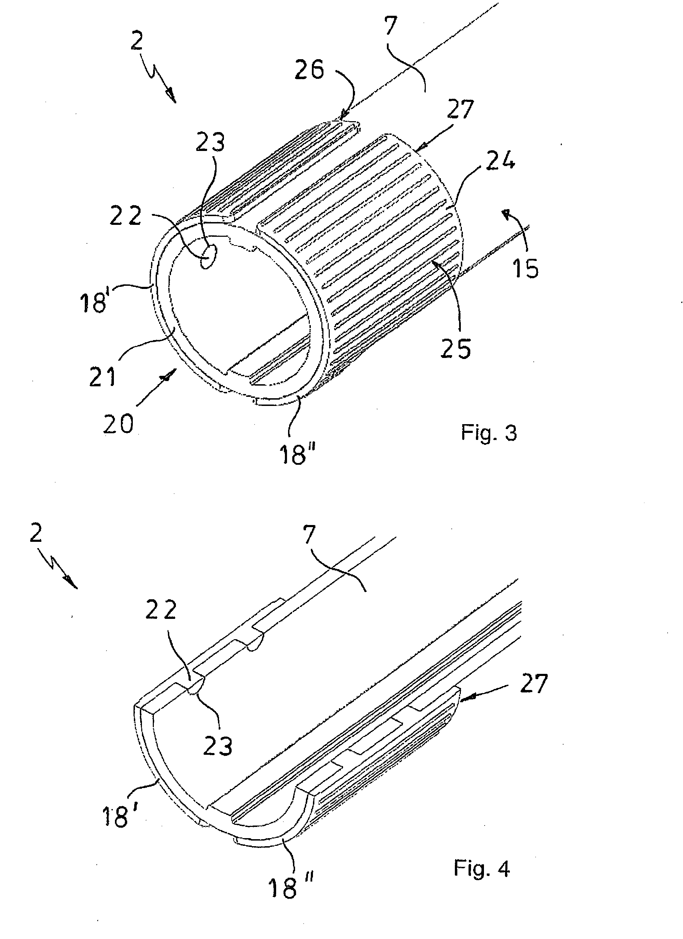

Die Figur 3 zeigt das Innenrohr 7 in perspektivischer Darstellung ohne das Außenrohr 6. Die direkt an dem einschubseitigen Rohrende 20 angeordneten Führungshülsensegmente 18', 18" fluchten vorne mit der Stirnseite 21 des Innenrohres 7. Die Führungshülsensegmente 18', 18" sind über Haltezapfen 22, die in Haltedurchbrüche 23 des Innenrohres 7 eingreifen, an dem Innenrohr 7 unverrückbar fixiert. Wie der Figur 4 zu entnehmen ist, sind die Haltezapfen 22 dabei innen an die Führungshülsensegmente 18', 18" angeformt und weisen einen Durchmesser auf, der dem Bohrungsdurchmesser der Haltedurchbrüche 23 entspricht.

Die Führungshülsensegmente 18', 18" weisen an der dem Außenrohr 6 zugeordneten Außenwand 24 axial verlaufende voneinander in Umfangsrichtung beabstandete Längserhebungen 25 als Gleitlager für das Außenrohr 6 auf. Die dem einschubseitigen Rohrende 20 abgewandte Stirnseite 26 der Führungshülsensegmente 18', 18" bildet einen Endanschlag 27 für das nur in der Figur 1 sichtbare aufschubseitige Rohrende 9 des Außenrohres 6. Das Außenrohr 6 weist einen Gegenanschlag für den Endanschlag 27 auf, der beispielsweise Teil der Feststelleinrichtung 10 sein kann.

## Patentansprüche

1. Suchgerät (1) mit einer teleskopierbaren Trag-/Führungsstange (2), an der an einem Ende eine Messsonde (3) angeordnet ist, wobei die Trag-/Führungsstange (2) mindestens zwei ineinander längsverschiebbare einander gegenüber blockierbare verdrehsichere Rohre (6, 7, 8) aufweist, die ein Außenrohr (6, 7) und ein Innenrohr (7, 8) bilden, wobei die Rohre (6, 7, 8) eine Lineargleitführung (12) als Verdrehsicherung einander gegenüber aufweisen, **dadurch gekennzeichnet, dass** die Lineargleitführung (12) mindestens eine an der Innenwand (13) des Außenrohres (6, 7) angeordnete Längsrippe (14) und mindestens eine an den Außenumfang (16) des Innenrohres (7, 8) angeordnete Rippenführung (15) umfasst, wobei die Rippenführung (15) eine Ausnehmung (17) aufweist, in die die Längsrippe (14) eingreift, wobei die Längsrippe (14) sich innen über die Gesamtlänge des Außenrohres (6, 7) und die Rippenführung (15) sich außen über eine Teillänge des Innenrohres (7, 8) an dem einschubseitigen Rohrende (20) des Innenrohres (7, 8) erstreckt, und wobei die Rippenführung (15) von einer am Außenumfang (16) des Innenrohres (7, 8) angeordneten Führungshülse (18) gebildet ist, die in Umfangsrichtung geteilt ausgebildet ist.

2. Suchgerät nach Anspruch 1, **dadurch gekennzeichnet, dass** die Führungshülse (18) eine der Anzahl der Längsrippen (14) des Außenrohres (6, 7) entsprechende Zahl von Ausnehmungen (17) aufweist.

3. Suchgerät nach Anspruch 1 oder 2, **dadurch gekennzeichnet, dass** die Führungshülse (18) eine der Anzahl der Längsrippen (14) des Außenrohres (6, 7) entsprechende Zahl schalenförmige in Umfangsrichtung beabstandet zueinander angeordnete Führungshülsensegmente (18', 18") aufweist, deren Zwischenräume (19) die Ausnehmungen (17) bilden.

4. Suchgerät nach Anspruch 2 oder 3, **dadurch gekennzeichnet, dass** die Führungshülse (18) bzw. die Führungshülsensegmente (18', 18") über Haltezapfen (22), die in Haltedurchbrüche (23) des Innenrohres (7, 8) eingreifen, an dem Innenrohr (7, 8) unverrückbar fixiert sind.

5. Suchgerät nach einem der vorhergehenden Ansprüche, **dadurch gekennzeichnet, dass** die dem einschubseitigen Rohrende (20) des Innenrohres (7, 8) abgewandte Stirnseite (21) der Führungshülse (18) oder der Führungshülsensegmente (18', 18") einen Endanschlag (27) für das aufschubseitige Rohrende (9, 9') des Außenrohres (6, 7) bildet.

6. Suchgerät nach einem der vorstehenden Ansprüche 3 bis 5, **dadurch gekennzeichnet, dass** die Führungshülse (18) oder die Führungshülsensegmente (18', 18") an der dem Außenrohr (6,7) zugeordneten Außenwand (24) axial verlaufende voneinander in Umfangsrichtung beabstandete Längserhebungen (25) aufweisen.

## Claims

1. A detector (1) with a telescopic carrying/guide rod (2), arranged on one end of which there is a sensor (3), wherein the carrying/guide rod (2) includes at least two rotationally fixed tubes (6, 7, 8), which are longitudinally slidable within one another and are lockable with respect to one another and which constitute an outer tube (6, 7) and an inner tube (7, 8), wherein the tubes (6, 7, 8) include a linear sliding guide (12) constituting a rotational lock with respect to one another, **characterised in that** the linear sliding guide (12) includes at least one longitudinal rib (14), which is arranged on the inner wall (13) of the outer tube (6, 7), and at least one rib guide (15), which is arranged on the outer periphery (16) of the inner tube (7, 8), wherein the rib guide (15) includes an recess (17), into which the longitudinal rib (14) engages, wherein the longitudinal rib (14) extends internally over the entire length of the outer tube (6, 7) and the rib guide (15) extends externally over a proportion of the length of the inner tube (7, 8) at the insertion end (20) of the inner tube (7, 8) and wherein the rib guide (15) is constituted by a guide sleeve (18), which is arranged on the outer periphery (16) of the inner tube (7, 8) and is split in the peripheral direction.

2. A detector as claimed in Claim 1, **characterised in that** the guide sleeve (18) includes a number of recesses (17) which corresponds to the number of the longitudinal ribs (14) on the outer tube (6, 7).

3. A detector as claimed in Claim 1 or 2, **characterised in that** the guide sleeve (18) includes a number, which corresponds to the number of the longitudinal ribs (14) on the outer tube (6, 7), of dished guide sleeve segments (18', 18"), which are directed towards one another and spaced apart in the peripheral direction and the gaps (19) between which constitute the recesses (17).

4. A detector as claimed in Claim 2 or 3, **characterised in that** the guide sleeve (18) or the guide sleeve segments (18', 18") are immovably fixed in position on the inner tube (7, 8) by means of mounting pegs (22), which engage in holding openings (23) in the inner tube (7, 8).

5. A detector as claimed in one of the preceding claims, **characterised in that** the end face (21), remote from the insertion end (20) of the inner tube (7, 8), of the guide sleeve (18) or of the guide sleeve segments (18', 18"), constitutes an end stop (27) for the pushed over end (9, 9') of the outer tube (6, 7).

6. A detector as claimed in one of the preceding Claims 3 to 5, **characterised in that** the guide sleeve (18) or the guide sleeve segments (18', 18") include axially extending longitudinal protrusion (25), which are spaced from another in the peripheral direction, on the outer wall (24) associated with the outer tube (6, 7).

## Revendications

1. Appareil de recherche (1) avec une tige de support/guidage télescopique (2), à une extrémité de laquelle est disposée une sonde de mesure (3), la tige de support/guidage télescopique (2) présentant au moins deux tubes (6, 7, 8) pouvant coulisser longitudinalement l'un dans l'autre, blocables l'un par rapport à l'autre sans possibilité de rotation, qui forment un tube extérieur (6, 7) et un tube intérieur (7, 8), les tubes (6, 7, 8) présentant un guidage à glissement linéaire (12) comme moyen de blocage en rotation de l'un par rapport à l'autre, **caractérisé en ce que** le guidage à glissement linéaire (12) comprend au moins une nervure longitudinale (14) disposée sur la paroi intérieure (13) du tube extérieur (6, 7) et au moins un guide de nervure (15) disposé sur la périphérie extérieure (16) du tube intérieur (7, 8), le guide de nervure (15) présentant un évidement (17) dans lequel la nervure longitudinale (14) s'engage, la nervure longitudinale (14) s'étendant intérieurement sur toute la longueur du tube extérieur (6, 7) et le guide de nervure (15) extérieurement sur une partie de la longueur du tube intérieur (7, 8) à l'extrémité de tube côté introduction (20) du tube intérieur (7, 8), et le guide de nervure (15) étant formé par une douille de guidage (18) disposée sur la périphérie extérieure (16) du tube intérieur (7, 8), qui est réalisée en plusieurs parties dans la direction périphérique.

2. Appareil de recherche selon la revendication 1, **caractérisé en ce que** la douille de guidage (18) présente un nombre d'évidements (17) correspondant au nombre des nervures longitudinales (14) du tube extérieur (6, 7).

3. Appareil de recherche selon la revendication 1 ou 2, **caractérisé en ce que** la douille de guidage (18) présente un nombre de segments de douille de guidage (18', 18") en forme de cuvette, disposés à distance les uns des autres dans la direction périphérique, correspondant au nombre des nervures longitudinales (14) du tube extérieur (6, 7), dont les intervalles (19) forment les évidements (17).

4. Appareil de recherche selon la revendication 2 ou 3, **caractérisé en ce que** la douille de guidage (18) ou les segments de douille de guidage (18', 18") sont fixés de façon inamovible sur le tube intérieur (7, 8) au moyen de tenons (22) qui s'engagent dans des ouvertures de maintien (23) du tube intérieur (7, 8).

5. Appareil de recherche selon l'une des revendications précédentes, **caractérisé en ce que** la face frontale (21) de la douille de guidage (18) ou des segments de douille de guidage (18', 18") éloignée de l'extrémité de tube côté introduction (20) du tube intérieur (7, 8) forme une butée de fin de course (27) pour l'extrémité de tube (9, 9') côté enfilage du tube extérieur (6, 7).

6. Appareil de recherche selon l'une des revendications précédentes 3 à 5, **caractérisé en ce que** la douille de guidage (18) ou les segments de douille de guidage (18', 18") présentent des reliefs longitudinaux (25) s'étendant axialement, espacés les uns des autres dans la direction périphérique, sur la paroi extérieure (24) associée au tube extérieur (6, 7).
